# EUROPEAN PATENT SPECIFICATION

(11) **EP 2 634 410 B1**
(45) Date of publication and mention of the grant of the patent: **20.03.2024**
(21) Application number: 11836325.8
(22) Date of filing: 26.10.2011
(51) Int. Cl.: F02D 41/06, F02D 41/00, F02D 29/02, F02B 37/10, F02B 39/10, F02N 11/08, F02N 19/00

(54) **ENGINE SYSTEM**
MOTORSYSTEM
SYSTÈME DE MOTEUR

(30) Priority: 29.10.2010 JP 2010244387
(43) Date of publication of application: 04.09.2013
(73) Proprietor: Isuzu Motors, Ltd., Tokyo 140-8722 (JP)
(72) Inventor: KITSUKAWA Isao, Fujisawa-shi Kanagawa 252-8501 (JP); SUGANO Tomohiro, Fujisawa-shi Kanagawa 252-8501 (JP); ABE Yoshiyuki, Fujisawa-shi Kanagawa 252-8501 (JP); KIMURA Haruyo, Fujisawa-shi Kanagawa 252-8501 (JP); IIJIMA Akira, Fujisawa-shi Kanagawa 252-8501 (JP); ISHIBASHI Naoki, Fujisawa-shi Kanagawa 252-8501 (JP); SAKASHITA Syougo, Fujisawa-shi Kanagawa 252-8501 (JP)
(74) Representative: Schaumburg und Partner Patentanwälte mbB
(86) International application number: PCT/JP2011/074654
(87) International publication number: WO 2012/057192

(56) References cited:
- EP-A2- 2 159 410
- WO-A1-2009/136994
- JP-A- 2007 040 151
- JP-A- 2010 084 660
- JP-A- 2010 223 046
- JP-A- 2010 236 533
- US-A1- 2010 300 414

## Description

### TECHNICAL FIELD

The present invention relates to an engine system which performs idle-stop control.

### BACKGROUND ART

Conventionally, an idling engine stopping system (ISS) has been actively developed to improve fuel efficiency of a vehicle (or to reduce a carbon dioxide discharge amount) (for example, see Patent Documents 1 to 4).

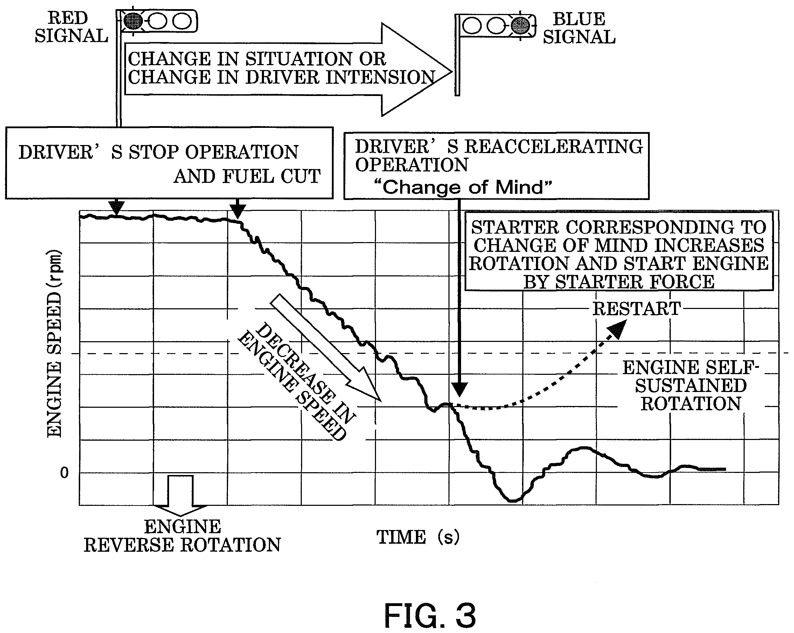

As illustrated in Fig. 3, when a driver catching a change in situation, for example, change from a red signal to a blue signal, performs a reaccelerating operation (a change of mind) while the speed of the engine to which a fuel injection is stopped is decreased by the idle-stop control, the ISS which detects the reaccelerating operation restarts the engine so as to reaccelerate the vehicle. However, the control at the restarting time largely differs depending on the engine speed upon detecting the reaccelerating operation.

When the engine speed is equal to or higher than the engine self-sustained speed, that is, the limited speed (indicated by the thin dashed line in Fig. 3) at which the engine may keep a combustion cycle, the engine is immediately restarted by resuming the fuel injection to the engine.

Meanwhile, when the engine speed is lower than the engine self-sustained speed, it is necessary to start a starter included in the engine so as to restart the engine. Further, in the starter included in the conventional engine, the restarting is prohibited until the engine completely stops, and thus the starter is operated after the engine completely stops. This is because a pinion gear or a starter motor may be damaged when the pinion gear of the starter engages with a ring gear of the engine before the engine completely stops, and particularly when the engine rotates reversely.

In the vehicle with the ISS, there is an increase in the frequency of times of immediately starting the vehicle to move after the engine is stopped and restarted. Accordingly, there is a demand to ensure the starting performance or the driving performance for immediately restarting and accelerating the engine when the reaccelerating is demanded.

### PRIOR ART DOCUMENTS

### PATENT DOCUMENTS

Patent Document 1: JP 2001-173546 A
Patent Document 2: JP 2010-190226 A
Patent Document 3: JP 2010-196629 A
Patent Document 4: JP 2006-177171 A

### NON-PATENT DOCUMENT

Non-Patent Document 1: Ibaraki Seichi et al., "Development of "hybrid turbo" of electric assist turbocharger", Heavy Industries Technical Review, Vol. 43, No. 3, 2006, pp. 36 to 40

### DISCLOSURE OF THE INVENTION

### PROBLEMS TO BE SOLVED BY THE INVENTION

In recent years, a technique of downsizing the engine has been developed in order to further improve the fuel efficiency. The downsized engine may reduce the fuel efficiency degradation caused by the friction inside the engine.

In the downsized engine, the displacement decreases and the engine torque decreases. Thus, a turbocharger is mounted on the engine so as to perform a supercharging operation for the improvement in power performance. However, since the exhaust energy is lower than the large-displacement engine at the low-load time like the start time, it is difficult to rotate an exhaust turbine and an intake compressor of a turbocharger with high responsiveness, and the starting performance is degraded in general.

It is desirable to further improve the fuel efficiency performance by providing the ISS even in the downsized engine. However, since the ISS increases the frequency of times of immediately starting the vehicle to move after the engine is stopped and restarted as described above, there is a demand to ensure the starting performance in the downsized engine.

An engine system according to the preamble of claim 1 is disclosed in WO 2009/136994 A1.

Another engine system is disclosed in JP 2007 040151 A. This system is configured to start an engine by activating an electric supercharger and performing fuel injection and ignition in a stroke cylinder after the engine is stopped by an idle-stop control. A start control is provided when an engine start command is generated after the engine has completely stopped.

The invention is made in view of the above-described problems, and it is an object of the invention to provide an engine system capable of immediately restarting an engine when detecting a driver's reaccelerating operation while an engine speed is decreased by idle-stop control.

### MEANS FOR SOLVING THE PROBLEMS

To achieve the above-mentioned object, an engine system according to claim 1 is provided. The engine system includes an idle-stop control unit which performs idle-stop control of stopping a fuel injection to an engine in an engine idling state upon stopping a vehicle by connecting an electric assist turbocharger obtained by a combination of a motor and a turbocharger to an intake and exhaust system of the engine, wherein the idle-stop control unit restarts the engine by resuming the fuel injection to the engine while operating the motor upon detecting a reaccelerating operation during the idle-stop control and decrease of the engine speed.

In the engine system, the idle-stop control unit may detect an engine speed during the idle-stop control and, according to the invention, is configured to restart the engine by resuming the fuel injection to the engine while operating the motor without operating a starter included in the engine, when the engine speed upon detecting the reaccelerating operation during the idle-stop control and decrease of the engine speed is equal to or higher than a first speed at which the engine is able to continue a combustion cycle during the operation of the motor, wherein the first speed is higher than zero and lower than a second speed which is a lowest limit speed at which the engine is able to keep a combustion cycle by resuming the fuel injection without operating the starter and the motor.

In the engine system, the idle-stop control unit may also restart the engine by resuming the fuel injection to the engine while operating the starter and the motor after the engine is completely stopped when the engine speed upon detecting the reaccelerating operation during the idle-stop control is lower than the speed at which the engine is able to continue the combustion cycle during the operation of the motor.

The engine system may include a starter capable of immediately restarting the engine regardless of the engine speed.

In the engine system, the idle-stop control unit may detect the reaccelerating operation from a brake releasing operation, a parking brake releasing operation, or a clutch pedal manipulating operation.

### EFFECTS OF THE INVENTION

According to the invention, it is possible to provide the engine system capable of immediately restarting the engine even when the engine speed is lower than the self-sustained speed upon detecting the driver's reaccelerating operation while the engine speed is decreased by the idle-stop control.

### BRIEF DESCRIPTION OF THE DRAWINGS

Fig. 1 is a diagram illustrating a configuration of an engine system of the invention;
Fig. 2 is a diagram illustrating an operation outline and an effect of the engine system of the invention; and
Fig. 3 is a diagram illustrating a transition in engine speed until an engine is completely stopped after a fuel injection to an engine of a stopped vehicle is stopped by an ISS.

### BEST MODES FOR CARRYING OUT THE INVENTION

Hereinafter, a preferred embodiment of the invention will be described with reference to the drawings.

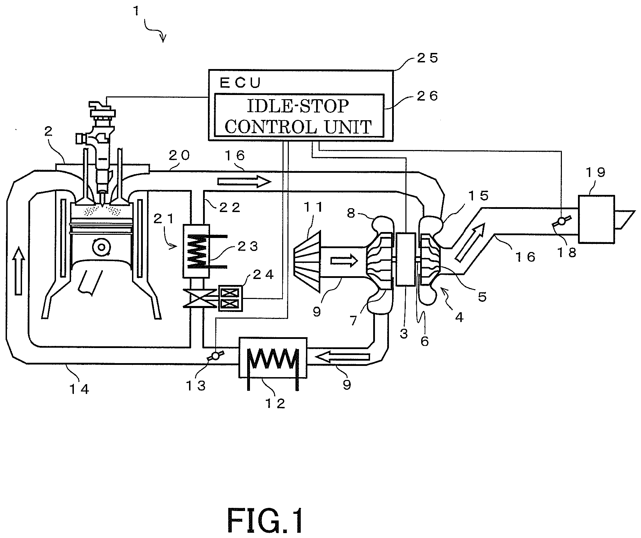

Fig. 1 is a diagram illustrating a configuration of an engine system of the invention.

As illustrated in Fig. 1, an engine system 1 of the invention includes an electric assist turbocharger 4 which is driven by exhaust energy from an engine 2 and/or an operation of a motor 3 and supercharges air to the engine 2. In the embodiment, a case will be described in which the engine 2 includes a starter that is not operated until the engine completely stops when an engine speed is lower than an engine self-sustained speed, but the invention is not limited thereto.

The electric assist turbocharger 4 includes an exhaust turbine 5 which is rotationally driven by exhaust energy of an exhaust gas, an intake compressor 7 which is driven by receiving the rotational driving of the exhaust turbine 5, and a motor 3 which electrically assists the rotational driving of the intake compressor 7. Here, the motor shaft of the motor 3 is integrated with a turbo shaft 6 which transmits the rotational driving of the exhaust turbine 5 to the intake compressor 7.

A compressor housing 8 of the intake compressor 7 is disposed in an intake passage 9. An air cleaner 11 is provided at the most upstream side of the intake passage 9, and an intercooler 12 and an intake throttle 13 are sequentially provided at the downstream side. The most downstream side of the intake passage 9 is connected to an intake manifold 14 of the engine 2. Air which is suctioned from the air cleaner 11 is supplied to the engine 2 through the intake passage 9, the compressor housing 8, the intercooler 12, the intake throttle 13, and the intake manifold 14.

Meanwhile, a turbine housing 15 of the exhaust turbine 5 is disposed in an exhaust passage 16, and an exhaust throttle 18 and a muffler 19 are sequentially provided at the downstream side of the turbine housing 15. The most upstream side of the exhaust passage 16 is connected to an exhaust manifold 20 of the engine 2. An exhaust gas which is discharged from the engine 2 is discharged to the atmosphere through the exhaust manifold 20, the exhaust passage 16, the turbine housing 15, the exhaust throttle 18, and the muffler 19. Further, in the invention, a DPF (Diesel Particulate Filter) system or a De-NOx catalyst may be provided in the exhaust passage 16.

Further, the engine system 1 includes an EGR (Exhaust Gas Recirculation) system 21 which causes a part of the exhaust gas discharged from the engine 2 to flow back to the intake side and reduces the NOx amount from the engine.

The EGR system 21 includes an EGR pipe 22 which connects the exhaust manifold 20 to the intake manifold 14, an EGR cooler 23 which cools the temperature of the exhaust gas passing through the EGR pipe 22, and an EGR valve 24 which adjusts the amount of the exhaust gas flowing back to the intake side. The opening degree of the EGR valve which is connected to an ECU (Electronical Control Unit) 25 is controlled and adjusted so as to reduce the NOx amount from the engine in accordance with the engine operation state.

The ECU 25 is connected to not only the EGR valve, but also the engine 2, the motor 3, the intake throttle 13, and the exhaust throttle 18 so as to control the operation thereof. In addition, the ECU 25 recognizes a signal relating to a vehicle driving parameter such as a vehicle speed, an engine speed, a fuel injection amount, an accelerator opening degree, a brake signal, or a clutch signal.

Incidentally, the engine system of the invention performs idle-stop control of stopping the engine by stopping the fuel injection to the engine in the engine idling state while the vehicle is stopped so as to improve the fuel efficiency performance of the vehicle. In this case, there is a need to immediately reaccelerate the vehicle by restarting the engine when the driver catching a change in situation during the idle-stop control performs a reaccelerating operation (the change of mind).

Since the engine system 1 with the electric assist turbocharger 4 can increase the engine torque by performing the supercharging operation by the operation of the motor 3 even at the extremely low speed, the limited speed at which the engine 2 may sustain the self-combustion cycle can be set to the low-speed rotation side (for example, about 150 rpm).

Therefore, the engine system 1 of the invention includes an idle-stop control unit 26 which restarts the engine 2 by resuming the fuel injection to the engine 2 while operating the motor 3 of the electric assist turbocharger 4 during the idle-stop control as illustrated in Fig. 1.

Further, the idle-stop control unit 26 detects the speed of the engine 2 during the idle-stop control. Then, the idle-stop control unit restarts the engine 2 by resuming the fuel injection to the engine 2 during operating the motor 3 when the engine speed upon detecting the reaccelerating operation during the idle-stop control is equal to or higher than the speed (the self-sustained speed of the engine 2 with the electric assist turbocharger 4) at which the engine 2 during the operation of the motor 3 (that is, the electric assist supercharging operation) can sustain the combustion cycle. The self-sustained speed of the engine with the electric turbocharger may be appropriately set based on the displacement of the engine 2 included in the engine system, the supercharging performance of the electric assist turbocharger 4, the output of the motor 3, and the like, and is set to, for example, about 150 rpm.

Moreover, the idle-stop control unit 26 is configured to restart the engine 2 by resuming the fuel injection to the engine 2 while operating the starter included in the engine 2 and the motor 3 after the engine 2 is completely stopped when the engine speed upon detecting the reaccelerating operation during the idle-stop control is lower than the self-sustained speed of the engine 2 with the electric assist turbocharger 4.

The idle-stop control unit 26 is prepared as a program in the ECU 25.

Next, the idle-stop control operation of the engine system 1 of the invention will be described.

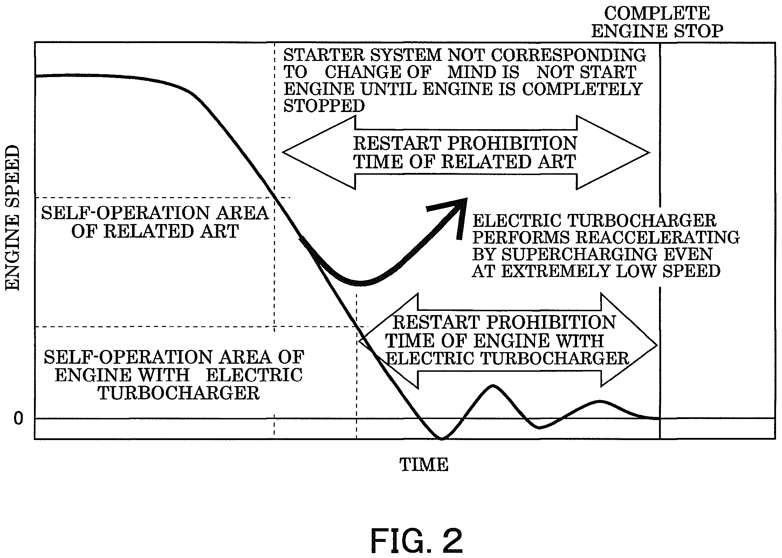

Fig. 2 is a diagram illustrating the outline of the operation of the engine system 1 of the invention and the effect of the invention.

When a state where the vehicle stops and the engine 2 idly rotates is continued for a predetermined time, the idle-stop control unit 26 of the ECU 25 stops the engine 2 by stopping the fuel injection to the engine 2. The invention does not limit a unit for detecting the vehicle stop state, and the stop state may be detected based on the signal from the vehicle speed sensor.

During the idle-stop control, the idle-stop control unit 26 acquires the speed of the engine 2 input to the ECU 25.

The speed of the engine 2 of which the fuel injection is stopped by the idle-stop gradually decreases, but when the driver catching a change in situation from a red signal to a blue signal performs the reaccelerating operation for reaccelerate the vehicle, the idle-stop control unit 26 which detects the reaccelerating operation performs the following operation so as to restart the engine 2.

When the reaccelerating operation is detected, the idle-stop control unit 26 restarts the engine 2 by resuming the fuel injection to the engine 2 without operating the starter included in the engine 2 while performing the air supercharging operation through the electric assist turbocharger 4 by operating the motor 3 of the electric assist turbocharger 4.

At this time, since the rotation of the electric assist turbocharger 4 using the motor 3 is normally involved with the power consumption (that is, the fuel efficiency degradation), the motor can be effectively assisted by controlling the motor 3 by using the driver's reaccelerating operation, for example, an operation in which the brake pedal is released, the parking brake is released, and the clutch pedal is operated (MT vehicle), as the starting point.

Meanwhile, the speed of the engine 2 of which the fuel injection is stopped by the idle-stop control gradually decreases, but when the speed of the engine 2 is lower than the self-sustained speed of the engine 2 with the electric assist turbocharger 4 upon detecting the reaccelerating operation, the engine 2 is restarted by resuming the fuel injection to the engine 2 in a manner such that the starter included in the engine 2 is operated while performing the air supercharging operation through the electric assist turbocharger 4 after the engine 2 is completely stopped.

By the above-described operation, the engine system 1 of the invention generates the larger torque in the engine 2 by the air supercharging operation through the operation of the motor 3 of the electric assist turbocharger 4 even when the engine speed is lower than the speed at which the engine may not sustain the self combustion cycle due to a degradation in the torque in the case of the engine system of the related art. Accordingly, it is possible to widen the vehicle restarting operation area by immediately restarting the engine 2 without operating the starter included in the engine 2.

That is, according to the invention, it is possible to restart the engine even at the engine speed equal to or lower than the self-sustained speed at which the restarting of the engine is prohibited in the engine system of the related art, and hence to shorten the time until the restarting operation may be performed after the engine self-sustained operation may not be performed and the engine is completely stopped compared to the system of the related art. Accordingly, it is possible to improve the driving performance in the vehicle equipped with the engine system 1 of the invention.

Further, since the engine with the electric assist turbocharger may generate a torque regardless of the engine speed, it is possible to generate power as in the case of the large-displacement engine even in the small-displacement engine which is downsized for the fuel efficiency. That is, since the supercharging operation is performed by the electric assist turbocharger when restarting the engine, the engine torque may be immediately increased and hence the vehicle may be smoothly started to move.

Moreover, when the starter corresponding to the change of mind (that is, the starter which may be restarted at any time regardless of the speed of the engine) is combined with the invention, the number of times of operating the starter decreases. Accordingly, it is possible to improve the life time of the starter and hence to reduce the vibration and the noise generated when driving the starter.

### EXPLANATION OF REFERENCE NUMERALS

- 2: engine
- 3: motor
- 4: electric assist turbocharger
- 26: idle-stop control unit

## Claims

1. An engine system comprising:
an idle-stop control unit (26) which performs idle-stop control of stopping a fuel injection to an engine (2) in an engine idling state upon stopping a vehicle;
an electric assist turbocharger (4) connected to an intake and exhaust system of the engine (2) and obtained by a combination of a motor (3) and a turbocharger; and
a starter for starting the engine (2);
wherein the idle-stop control unit restarts the engine (2) by resuming the fuel injection to the engine (2) while operating the motor (3) upon detecting a reaccelerating operation during the idle-stop control and decrease of the engine speed,
**characterized in that** the idle-stop control unit (26) restarts the engine (2) by resuming the fuel injection to the engine (2) while operating the motor (3) without operating the starter, when an engine speed upon detecting the reaccelerating operation during the idle-stop control and decrease of the engine speed is equal to or higher than a first speed at which the engine (2) is able to continue a combustion cycle during the operation of the motor (3);
wherein the first speed is higher than zero and lower than a second speed which is a lowest limit speed at which the engine (2) is able to keep a combustion cycle by resuming the fuel injection without operating the starter and the motor.

2. The engine system according to claim 1,
wherein the idle-stop control unit (26) restarts the engine (2) by resuming the fuel injection to the engine (2) while operating the starter and the motor (3) after the engine (2) is completely stopped when the engine speed upon detecting the reaccelerating operation during the idle-stop control is lower than the first speed.

3. The engine system according to claim 1 or 2,
wherein the idle-stop control unit (26) detects the reaccelerating operation from a brake releasing operation, a parking brake releasing operation, or a clutch pedal manipulating operation.

## Patentansprüche

1. Motorsystem, umfassend:
eine Leerlauf-Stopp-Steuereinheit (26), die eine Leerlauf-Stopp-Steuerung des Stoppens einer Kraftstoffeinspritzung in einen Motor (2) in einem Motorleerlaufzustand beim Anhalten eines Fahrzeugs durchführt;
einen elektrisch unterstützten Turbolader (4), der mit einem Ansaug- und Abgassystem des Motors (2) verbunden ist und durch eine Kombination aus einem Elektromotor (3) und einem Turbolader erhalten wird; und
einen Anlasser zum Starten des Motors (2);
wobei die Leerlauf-Stopp-Steuereinheit den Motor (2) neu startet, indem sie die Kraftstoffeinspritzung in den Motor (2) wieder aufnimmt, während sie den Elektromotor (3) betreibt, wenn sie einen Wiederbeschleunigungsvorgang während der Leerlauf-Stopp-Steuerung und eine Abnahme der Motordrehzahl erfasst,
**dadurch gekennzeichnet, dass** die Leerlauf-Stopp-Steuereinheit (26) den Motor (2) neu startet, indem sie die Kraftstoffeinspritzung in den Motor (2) wieder aufnimmt, während der Elektromotor (3) ohne Betätigung des Anlassers betrieben wird, wenn eine Motordrehzahl beim Erfassen des Wiederbeschleunigungsvorgangs während der Leerlauf-Stopp-Steuerung und der Abnahme der Motordrehzahl gleich oder höher als eine erste Drehzahl ist, bei der der Motor (2) in der Lage ist, einen Verbrennungszyklus während des Betriebs des Elektromotors (3) fortzusetzen;
wobei die erste Drehzahl höher als Null und niedriger als eine zweite Drehzahl ist, die eine niedrigste Grenzdrehzahl ist, bei der der Motor (2) in der Lage ist, einen Verbrennungszyklus aufrechtzuerhalten, indem er die Kraftstoffeinspritzung ohne Betätigung des Anlassers und des Elektromotors wieder aufnimmt.

2. Motorsystem nach Anspruch 1,
wobei die Leerlauf-Stopp-Steuereinheit (26) den Motor (2) durch Wiederaufnahme der Kraftstoffeinspritzung in den Motor (2) neu startet, während sie den Anlasser und den Elektromotor (3) betätigt, nachdem der Motor (2) vollständig gestoppt wurde, wenn die Motordrehzahl beim Erfassen des Wiederbeschleunigungsvorgangs während der Leerlauf-Stopp-Steuerung niedriger als die erste Drehzahl ist.

3. Motorsystem nach Anspruch 1 oder 2,
wobei die Leerlauf-Stopp-Steuereinheit (26) den Wiederbeschleunigungsvorgang aus einem Bremslösevorgang, einem Feststellbremslösevorgang oder einem Kupplungspedalbetätigungsvorgang erkennt.

## Revendications

1. Système de moteur, comprenant :
une unité de commande d'arrêt au ralenti (26) qui effectue une commande d'arrêt au ralenti pour arrêter une injection de carburant vers un moteur (2) dans un état de ralenti de moteur lors de l'arrêt d'un véhicule ;
un turbocompresseur à assistance électrique (4) relié à un système d'admission et d'échappement du moteur (2) et obtenu par une combinaison d'un moteur électrique (3) et d'un turbocompresseur ; et
un démarreur pour démarrer le moteur (2) ;
dans lequel l'unité de commande d'arrêt au ralenti redémarre le moteur (2) en reprenant l'injection de carburant vers le moteur (2) tout en faisant fonctionner le moteur électrique (3) lors de la détection d'une opération de réaccélération pendant la commande d'arrêt au ralenti et la diminution du régime moteur,
**caractérisé en ce que** l'unité de commande d'arrêt au ralenti (26) redémarre le moteur (2) en reprenant l'injection de carburant vers le moteur (2) tout en faisant fonctionner le moteur électrique (3) sans faire fonctionner le démarreur, lorsqu'un régime moteur lors de la détection de l'opération de réaccélération pendant la commande d'arrêt au ralenti et la diminution du régime moteur est égal ou supérieur à un premier régime auquel le moteur (2) est capable de poursuivre un cycle de combustion pendant le fonctionnement du moteur électrique (3) ;
dans lequel la première vitesse est supérieure à zéro et inférieure à une seconde vitesse qui est une vitesse limite la plus basse à laquelle le moteur (2) est capable de maintenir un cycle de combustion en reprenant l'injection de carburant sans faire fonctionner le démarreur et le moteur électrique (3).

2. Système de moteur selon la revendication 1,
dans lequel l'unité de commande d'arrêt au ralenti (26) redémarre le moteur (2) en reprenant l'injection de carburant vers le moteur (2) tout en faisant fonctionner le démarreur et le moteur électrique (3) après que le moteur (2) soit complètement arrêté lorsque le régime moteur lors de la détection de l'opération de réaccélération pendant la commande d'arrêt au ralenti est inférieur au premier régime.

3. Système de moteur selon la revendication 1 ou 2,
dans lequel l'unité de commande d'arrêt au ralenti (26) détecte l'opération de réaccélération à partir d'une opération de libération de frein, d'une opération de libération de frein de stationnement ou d'une opération de manipulation de pédale d'embrayage.
